# EUROPÄISCHE PATENTSCHRIFT

(11) **EP 2 576 173 B1**
(45) Veröffentlichungstag und Bekanntmachung des Hinweises auf die Patenterteilung: **12.02.2020**
(21) Anmeldenummer: 11722742.1
(22) Anmeldetag: 19.05.2011
(51) Int. Cl.: B29C 41/08, B29C 41/18, B29C 37/00, B60R 13/02, B29K 27/06, B29K 75/00, B29K 105/00

(54) **VERFAHREN ZUM ERZEUGEN EINER FORMHAUT MIT EINEM DEKOR, VERFAHREN ZUR HERSTELLUNG EINES FAHRZEUGINNENVERKLEIDUNGSTEILS**
METHOD FOR PRODUCING A MOULDED SKIN HAVING A DECORATION, METHOD FOR PRODUCING A VEHICLE INTERIOR LINING PART
PROCÉDÉ POUR GÉNÉRER UNE PEAU DE MOULAGE DOTÉE D'UN DÉCOR, PROCÉDÉ POUR FABRIQUER UNE PARTIE D'HABILLAGE INTÉRIEURE DE VÉHICULE

(30) Priorität: 25.05.2010 DE 102010022033
(43) Veröffentlichungstag der Anmeldung: 10.04.2013
(73) Patentinhaber: Faurecia Innenraum Systeme GmbH, 76767 Hagenbach (DE)
(72) Erfinder: PERINET, Denis, Simpsonville SC 29681 (US)
(74) Vertreter: Pfenning, Meinig & Partner mbB
(86) Internationale Anmeldenummer: PCT/EP2011/002625
(87) Internationale Veröffentlichungsnummer: WO 2011/147581

(56) Entgegenhaltungen:
- EP-A1- 2 153 966
- WO-A1-96/23041
- JP-A- 61 244 512
- US-A- 3 861 955
- US-A- 5 370 831
- US-A1- 2009 062 454
- N.N.: "What does 2005 have in store?", , 30. November 2004 (2004-11-30), Seite 1, XP002663478, Gefunden im Internet: URL:http://www.plasticstoday.com/articles/ what-does-2005-have-store [gefunden am 2011-11-14]

## Beschreibung

Die Erfindung betrifft ein Verfahren zum Erzeugen einer Formhaut mit einem Dekor, ein Verfahren zur Herstellung eines Fahrzeuginnenverkleidungsteils, eine Formhaut sowie ein Fahrzeuginnenverkleidungsteil.

Nach dem Stand der Technik sind verschiedene Verfahren zum Erzeugen einer Formhaut mit einem Dekor bekannt. In den meisten bekannten Verfahren wird im Verfahren eine Gießform mit in einer Formoberfläche angeordneten Vertiefungen verwendet. In die Vertiefungen wird ein erstes Kunststoffmaterial eingebracht und zumindest teilweise ausgehärtet. Anschließend wird ein zweites Kunststoffmaterial, welches eine vom ersten Kunststoffmaterial verschiedene Färbung aufweist, in die Form gegeben und zwecks Bildung einer Formhaut erhitzt.

Bei derartigen Verfahren werden Formhäute erzeugt, welche eine zur Gießform negative Form aufweisen.

Das in die Vertiefung eingebrachte erste Kunststoffmaterial bildet also auf der restlichen Formhaut angeordnete Erhöhungen. Ein Beispiel eines derartigen Verfahrens ist in der Druckschrift US 5 073 325 offenbart.

Derartige Verfahren weisen jedoch den Nachteil auf, dass sie relativ aufwendig sind und mehrere Heizschritte erfordern. Hierdurch sind die Kosten derart hergestellter Formhäute relativ hoch. Des Weiteren haben die auf der Formhaut angeordneten Erhöhungen einen negativen Einfluss auf die Haptik der Formhaut. Ein weiterer Nachteil ist, dass ein Dekor aufweisende Bereiche der Formhaut, welche aufgrund des Dekors in besonderem Maße die Aufmerksamkeit von Betrachten auf sich ziehen, durch ihre erhöhte Anordnung einem besonders starken Verschleiß ausgesetzt sind.

Die Druckschrift JP61244512 A offenbart ein Verfahren, bei dem zu dem Zeitpunkt, wenn eine vorbestimmte Haut geformt wird, indem ein thermoplastisches Kunstharzmaterial in einer Formkammer gehalten wird, die Haut geformt wird, nachdem ein andersfarbiger Teil in einem vorbestimmten Muster durch vorheriges Stanzen auf einem Teil der Innenseite eines Formwerkzeugs gebildet worden ist.

Das Verfahren aus der Druckschrift EP2 153 966 A1 umfasst das Erhitzen eines Rotationssinterwerkzeugs und das Schmelzen von Kunststoffpulver an der Werkzeugoberfläche. Auf der Werkzeugoberfläche wird eine geformte Haut gebildet, und das Werkzeug wird gekühlt. Die Kunststoffformhaut wird entfernt. Vor dem Schmelzen des Kunststoffpulvers im erwärmten Rotationssinterwerkzeug wird durch Aufbringen eines Farbmediums auf die Werkzeugoberfläche eine farbige Oberfläche oder eine negative Darstellung eines Druckbildes erzeugt. Das farbige Medium besteht aus Dispersionsfarbe, Farbe oder flüssigem Polyvinylchlorid.

US3861955 A beschreibt ein Verfahren zum Dekorieren von Erzeugnissen bei oder unmittelbar nach ihrer Herstellung. Partikuläres Dekorationsmaterial wird entweder direkt oder indirekt auf ausgewählte Bereiche des Artikels aufgebracht und in situ auf dem Artikel aufgeschmolzen.

Die Druckschrift WO96/23041 A1 bezieht sich auf ein verbessertes thermoplastisches Sprühmaterial und eine Beschichtung. Das thermoplastische Sprühmaterial wird vollständig trocknen, wenn es auf eine Innenfläche einer Form aufgebracht wird, so dass sich auf der Außenfläche des Kunststoffobjekts keine Streifen und Flecken bilden, wenn die Form den Rotationsformvorgang durchläuft. In seiner bevorzugten Ausführungsform kann das thermoplastische Spritzmaterial direkt auf die Außenfläche eines Kunststoffobjekts aufgebracht werden. Auf den Kunststoffgegenstand wird dann eine Heizeinrichtung aufgebracht, die das thermoplastische Spritzmaterial in und auf den Kunststoffgegenstand mischt.

Die Druckschrift US2009/062454 A1 zeigt unter anderem ein Verfahren zum Herstellen von Verbundhäuten durch Formen und ihre Verwendung für Teile des Fahrgastraums von Kraftfahrzeugen, wie insbesondere mit Airbags ausgerüstete Armaturenbretter.

In dem Website-Artikel vom 30. November 2004 "What does 2005 have in store" (URL: http://www.plasticstoday.com/articles/what-does-2005-have-store [14.11.2011]) wird ein In-Mold-Painting (IMP) Prozess beschrieben, der durch Slush-Molding eine Farbgestaltung der Oberflächen von geformten Teilen ermöglicht.

Gemäß Druckschrift US5370831 A kann eine Polymerhaut geformt werden, indem eine Formoberfläche auf eine Temperatur erhitzt wird, die ausreicht, um ein Gussmaterial zu schmelzen, und Partikel des Gussmaterials kontrolliert auf die erwärmte Formoberfläche zu ragen. Auf der Formoberfläche auftreffende Partikel des Gussmaterials schmelzen und haften an der Formoberfläche. Die Formoberfläche wird auf eine Temperatur abgekühlt, bei der sich das Gussmaterial zu einer Haut verfestigt.

Neben den vorangehend beschriebenen Verfahren sind Verfahren bekannt, in denen nachträglich eine Dekorfolie vertieft in die Dekorhaut eingearbeitet wird. Diese sind jedoch kompliziert auszuführen und weisen zusätzlich Sicherheitsnachteile auf. Beispielsweise können in Formhäute, die für Instrumententafeln mit einem darunter angeordneten Airbag verwendet werden, eingebrachte Dekors zu Verletzungen beim Auslösen des Airbags führen.

Aufgabe der vorliegenden Erfindung ist es, ein Verfahren zum Erzeugen einer Formhaut mit einem Dekor sowie eines Innenverkleidungsteils zu ermöglichen, welches eine Erzeugung einer Formhaut bzw. eines Fahrzeuginnenverkleidungsteils mit reduziertem Aufwand ermöglicht. Eine weitere Aufgabe der Erfindung ist es, eine Formhaut sowie ein Fahrzeuginnenverkleidungsteil zu ermöglichen, die mit reduziertem Aufwand herstellbar sind, in verringertem Umfang Verschleißerscheinungen zeigen und möglichst kein Verletzungsrisiko verursachen.

Diese Aufgaben werden durch Verfahren mit den Merkmalen des Anspruchs 1 gelöst. Vorteilhafte Weiterbildungen und Ausgestaltungen ergeben sich aus den Merkmalen der Unteransprüche.

Bei dem erfindungsgemäßen Verfahren zur Erzeugung einer Formhaut mit einem Dekor wird zunächst ein pigmenthaltiges Fluid auf mindestens eine Erhöhung einer Formfläche einer Gießform aufgebracht. Anschließend wird die Gießform vorgeheizt. In einem nachfolgenden Verfahrensschritt wird Kunststoffmaterial in die im Bereich der Erhöhung mit Pigmenten versehene Gießform eingebracht, so dass die Formfläche der Gießform mit dem Kunststoffmaterial, vorzugsweise ganzflächig, bedeckt wird. Abschließend wird die so gebildete Formhaut aus der Gießform entnommen. So wird auf einfache Weise eine Formhaut erzeugt, welche vertieft angeordnete Dekors aufweist.

Bevorzugt ist bei diesem Verfahren nur ein einziger Heizvorgang notwendig und vorgesehen. Beim nach dem Aufbringen des pigmenthaltigen Fluids erfolgenden Vorheizen kann das pigmenthaltige Fluid ausgehärtet werden, so dass eine Vermischung mit dem nach dem Vorheizen eingebrachten Kunststoffmaterial zuverlässig vermieden wird. Bei hinreichendem Vorheizen der Form ist nach dem Einbringen des Kunststoffmaterials kein erneutes Heizen der Form notwendig und kann daher bevorzugt weggelassen werden. Insbesondere in Ausführungsformen, in denen eine Gießform mit geringer Wärmekapazität verwendet wird, kann ein erneutes Erhitzen der Gießform nach dem Aufbringen des Kunststoffmaterials jedoch vorteilhaft sein.

Erfindungsgemäß erfolgt das Aufbringen des pigmenthaltigen Fluids durch Aufsprühen. Dies ist besonders einfach möglich, da vor dem Aufsprühen eine Maske auf die die Erhöhungen umgebenden Bereiche der Gießform aufgelegt wird. Die Maske verhindert, dass das pigmenthaltige Fluid auf andere Bereiche der Oberfläche der Gießform als die Erhöhungen gelangt. Ein Auflegen einer Maske ist bei diesem Verfahren besonders einfach, da die Gießform Erhöhungen aufweist, welche eine Fixierung der Maske unterstützen oder ermöglichen können. Insbesondere kann die Maske an seitlichen Flanken der Erhöhung anliegen, sodass eine zuverlässige Positionierung der Maske erreicht wird. Die Maske kann hierbei die Flanken vollständig abdecken, sodass nur die Oberseite der Erhöhung mit dem pigmenthaltigen Fluid bedeckt wird. Alternativ können durch die Maske die Flanken nur teilweise abgedeckt werden, sodass eine Grenze zwischen einem pigmentierten und einem unpigmentierten Bereich in den Flanken der Erhöhung verläuft. Eine besonders zuverlässige Positionierung der Maske wird erreicht, wenn die Flanken der Erhöhung orthogonal verlaufen. Wird eine Maske verwendet, so wird diese vorzugsweise vor dem Vorheizen der Form entfernt.

In einer weiteren vorteilhaften Ausführungsform wird als pigmenthaltiges Fluid ein Plastisol und vorzugsweise PVC-Plastisol verwendet. Dies ist insbesondere bei einem Aufsprühen des pigmenthaltigen Fluids vorteilhaft. Ebenso ist es jedoch möglich, dass als pigmenthaltiges Fluid ein Plastisol aufgepinselt oder auf eine andere dem Fachmann bekannte Art aufgetragen wird. Die Vorteile einer Verwendung eines Plastisols liegen beispielsweise in der einfach möglichen Anwendung des Plastisols, denn ein Plastisol ist einkomponentig, so dass ein vorheriges Mischen, wie bei zweikomponentigen Systemen notwendig, entfällt. Außerdem kann ein Plastisol über Wochen gelagert werden, ohne dass es bei Raumtemperatur geliert, so dass kein kurzer Verarbeitungszeitraum, wie oft bei zweikomponentigen Systemen vorgegeben, beachtet werden muss.

In einer alternativen Ausführungsform wird als pigmenthaltiges Fluid ein PU-Lack verwendet, der vorzugsweise als zweikomponentiger PU-Lack ausgebildet ist.

In einer weiteren vorteilhaften Ausführungsform weist das pigmenthaltige Fluid mindestens ein Farb- und/oder mindestens ein Effektpigment auf. Selbstverständlich ist auch eine Kombination verschiedener Farb- und Effektpigmente möglich. Effektpigmente können beispielsweise zum Erzeugen eines metallischen Glanzes ausgebildet sein. Des Weiteren ist es möglich, dass die Pigmente zum Erzeugen eines Farb- und/oder Helligkeitsflops, d. h. eines vom Betrachtungswinkel abhängigen Farbtons und/oder einer vom Betrachtungswinkel abhängigen Helligkeit, ausgebildet sind. Ebenso können die Pigmente fluoreszierend und/oder phosphoreszierend ausgebildet sein.

In einer weiteren vorteilhaften Ausführungsform wird das Aufbringen des Kunststoffmaterials durch Rotationssintern durchgeführt. Dies ist, in Kombination mit dem vorherigen Vorheizen, welches vorzugsweise zugleich zum Aushärten des pigmenthaltigen Fluids dient, eine besonders einfache Möglichkeit zur Aufbringung des Kunststoffmaterials. Selbstverständlich sind prinzipiell auch andere Möglichkeiten zum Aufbringen des Kunststoffmaterials, beispielsweise ein Aufsprühen, möglich.

In einer weiteren vorteilhaften Ausführungsform wird als Kunststoffmaterial ein Plastisol und besonders bevorzugt ein PVC-Plastisol verwendet. Durch die Verwendung eines Plastisols wird eine besonders gute Oberflächenqualität erreicht, wobei zugleich eine Verarbeitung besonders einfach ist.

In einer alternativen bevorzugten Ausführungsform wird als Kunststoffmaterial ein thermoplastisches Pulver, vorzugsweise thermoplastisches PVC-Pulver, verwendet. Dies ist besonders günstig und ermöglicht ebenfalls eine einfache Verarbeitung.

In weiteren alternativen Ausführungsformen können beliebige andere dem Fachmann als zur Herstellung von Formhäuten geeignet bekannte Materialien als Kunststoffmaterial verwendet werden. Beispielhaft sei Polyurethan als ein weiteres mögliches Kunststoffmaterial genannt.

In einer weiteren vorteilhaften Ausführungsform wird eine Gießform verwendet, die eine Mehrzahl von Erhöhungen aufweist, welche zumindest in einer Richtung von nicht erhöhten Bereichen voneinander getrennt sind. Die Erhöhungen können vorzugsweise beliebig geformt sein. Es sind also nicht nur rechteckige Erhöhungen möglich. Insbesondere können die Erhöhungen auch dreidimensional geformt sein, d. h. eine Höhe der Erhöhung ist über die Erhöhung vorzugsweise nicht konstant. Somit ist die Erstellung von beliebig geformten Dekors in der Formhaut möglich.

In weiteren Ausführungsformen kann es vorteilhaft sein, wenn die verwendete Gießform zumindest in einem Teil ihrer Oberfläche eine Narbung aufweist. Beispielsweise kann die Narbung natürlichem Leder nachempfunden sein. In derartigen Ausführungsformen kann es besonders bevorzugt sein, wenn die Gießform im Bereich der Erhöhungen keine Narbung aufweist. Dies ist insbesondere bei metallisch wirkenden Dekors vorteilhaft. Ebenso kann es jedoch auch vorteilhaft sein, wenn die Gießform auch im Bereich der Erhöhungen eine Narbung aufweist, wobei sich diese Vorzugsweise von einer Narbung in nicht-erhöhten Bereichen der Gießform unterscheidet. Hierdurch können beispielsweise verschiedene Ledersorten nachgeahmt werden.

Des Weiteren umfasst die Erfindung ein Verfahren zur Herstellung eines Fahrzeuginnenverkleidungsteils. Insbesondere kann das Verfahren als Verfahren zur Herstellung einer Instrumententafel ausgebildet sein. Das Verfahren umfasst die Schritte
- Herstellen einer Formhaut wie vorstehend beschrieben und
- Hinterschäumen der Formhaut.

Bevorzugt kann die Formhaut beim Hinterschäumen mit einem Träger verbunden werden.

In einer weiteren vorteilhaften Ausführungsform werden zu den Erhöhungen der Gießform korrespondierende Vertiefungen in der Formhaut vor dem Hinterschäumen mit einer Verstärkungsstruktur hinterlegt. Beispielsweise bei der Verwendung von metallisch aussehenden Effektpigmenten kann so eine besonders glaubwürdige Haptik erzeugt werden.

Ebenso kann es jedoch vorteilhaft sein, die Vertiefungen mit weicher Haptik auszubilden. Beispielsweise durch Kombination von weicher Haptik mit metallisch wirkenden Pigmenten kann eine besonders ungewöhnliche und somit exklusiv wirkende Kombination von Optik und Haptik erzielt werden.

Eine erfindungsgemäße Formhaut, die insbesondere als Dekorhaut für ein Fahrzeuginnenverkleidungsteil ausgebildet sein kann, weist eine Oberfläche mit mindestens einer Vertiefung auf. Ein in der Vertiefung angeordneter Bereich der Oberfläche, der vorzugsweise die gesamte Vertiefung umfasst, weist eine von der restlichen Oberfläche verschiedene Pigmentierung auf. Durch die Kombination von unterschiedlicher Pigmentierung und vertiefter Anordnung wird ein besonders hochwertig wirkender optischer Effekt erzielt. Ein die Pigmentierung beinhaltendes Material, welches beispielsweise als ausgehärtetes PVC-Plastisol ausgebildet sein kann, ist vorzugsweise mit dem die restliche Formhaut bildenden Kunststoffmaterial dadurch verbunden, dass das die restliche Formhaut bildende Kunststoffmaterial rückseitig an dem die Pigmentierung beinhaltenden Material angeschmolzen ist.

Außerdem umfasst die Erfindung ein Fahrzeuginnenverkleidungsteil, welches eine wie vorangehend beschriebene Formhaut sowie eine mit der Formhaut verbundene Schaumschicht umfasst. Des Weiteren umfasst das Fahrzeuginnenverkleidungsteil vorzugsweise mindestens einen auf einer der Formhaut abgewandten Seite der Schaumschicht angeordneten Träger.

In einer weiteren vorteilhaften Ausführungsform weist das Fahrzeuginnenverkleidungsteil des Weiteren eine Verstärkungsstruktur auf, welche im Bereich der Vertiefungen der Formhaut zwischen Formhaut und Schaumschicht angeordnet ist.

Vorteilhafte Ausgestaltungen der Erfindung werden nachfolgend anhand einiger Figuren erläutert. Es zeigen:
- Fig. 1: eine für das erfindungsgemäße Verfahren verwendete Gießform,
- Fig. 2: eine Gießform mit aufgebrachtem pigmenthaltigem Fluid und
- Fig. 3: eine Formhaut mit pigmentierten Vertiefungen.

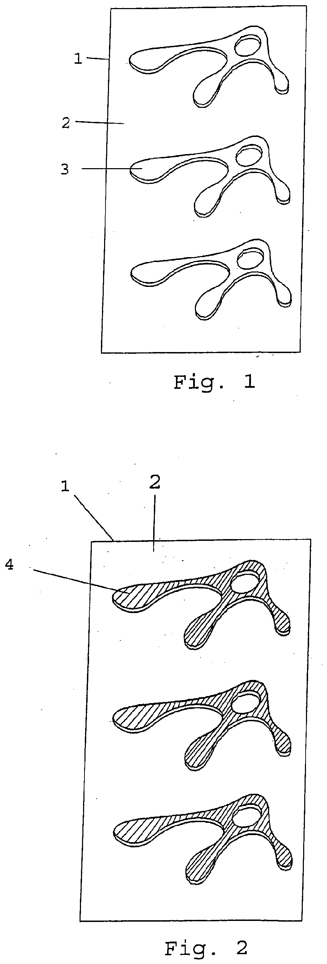

In Fig. 1 ist schematisch eine Gießform 1, welche für das erfindungsgemäße Verfahren verwendet wird, gezeigt. Die Gießform 1 weist eine Formoberfläche 2 mit Erhöhungen 3 auf. In einem ersten Verfahrensschritt wird ein pigmenthaltiges Fluid auf die Erhöhungen 3 aufgebracht.

Hierfür gibt es verschiedene Möglichkeiten. Beispielsweise kann ein die Erhöhungen 3 umgebender Bereich der Formoberfläche mit einer Maske bedeckt werden. Anschließend können die Erhöhungen 3 mit einem pigmenthaltigen Fluid, welches beispielsweise als PVC-Plastisol ausgebildet sein kann, besprüht werden, wobei die Maske nachfolgend entfernt wird.

Alternativ ist es möglich, das pigmenthaltige Fluid durch Aufstreichen oder Aufdrucken aufzubringen. Ein Maskieren ist dann nicht notwendig. Ein Aufstreichen oder Aufdrucken ist besonders einfach, da die Erhöhungen 3 hierfür besonders gut zugänglich sind.

Unabhängig von der gewählten Methode zum Aufbringen des pigmenthaltigen Fluids kann dieses verschiedenste Pigmente enthalten. Zum einen können Farbpigmente zum Erzeugen einer bestimmten Farbe verwendet werden. Ebenso kann das pigmenthaltige Fluid Effektpigmente enthalten. Diese können beispielsweise zum Erzeugen eines metallischen Glanzes oder einer vom Betrachtungswinkel abhängigen Färbung ausgebildet sein.

Die Gießform 1 nach dem Aufbringen des pigmenthaltigen Fluids ist in Fig. 2 dargestellt. Die pigmentbedeckte Oberfläche 4 der Erhöhung 3 ist durch Schraffierungen angedeutet.

Nach dem Aufbringen des pigmenthaltigen Fluids wird die Gießform 1 vorgeheizt. Das Vorheizen kann beispielsweise in einem hierfür vorgesehenen Vorheizofen durchgeführt werden. Selbstverständlich sind auch andere Methoden zum Vorheizen der Gießform 1 denkbar. Beispielsweise kann die Gießform 1 einer heißen Luftströmung oder IR-Strahlung ausgesetzt werden.

Nach dem Vorheizen der Gießform 1 wird die gesamte Formoberfläche 2 mit einem Kunststoffmaterial bedeckt. Eine Möglichkeit hierfür ist, die Gießform 1 mit einem Pulverkasten zu verbinden und eine Formhaut durch Rotationssintern zu bilden. Ebenso ist es jedoch möglich, ein Pulver oder ein Plastisol auf die Oberfläche 2 der Formhaut 1 aufzusprühen.

Durch den vorangehenden Vorheizschritt, durch den vorzugsweise einerseits das pigmenthaltige Fluid ausgehärtet und andererseits die Gießform 1 vorgeheizt wurde, ist vorzugsweise ein erneutes Heizen der Form nicht notwendig, da das Kunststoffmaterial allein durch die beim Vorheizen in die Form eingebrachte Wärme ausgehärtet wird. Je nach Ausführungsform kann jedoch auch ein erneuter Heizschritt nach dem Einbringen des Kunststoffmaterials vorteilhaft sein.

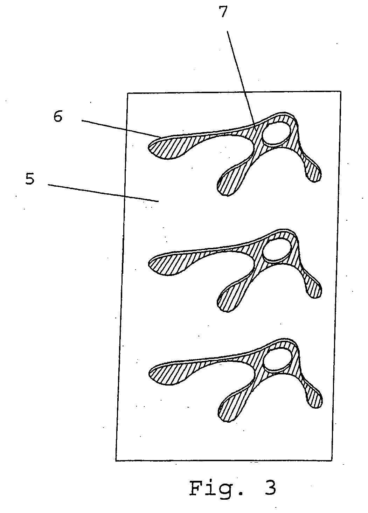

In Fig. 3 ist eine wie vorangehend beschrieben erzeugte Formhaut 5 dargestellt. Die Formhaut 5 weist Vertiefungen 6 auf, welche einem Negativ der auf der Gießform 1 angeordneten Erhöhungen 3 entsprechen. Die Oberfläche der Vertiefungen 6 weist eine Pigmentierung 7 auf, welche beispielsweise durch ein ausgehärtetes pigmenthaltiges Plastisol gebildet sein kann. Diese Pigmentierung ist rückseitig mit der übrigen Formhaut verbunden, wobei die Verbindung bei Verwendung von PVC-Plastisol durch Angelieren des die übrige Formhaut bildenden Kunststoffmaterials an dem die Pigmentierung 7 bildende Material gebildet ist. Je nach verwendetem Material kann die Verbindung auch durch Anhaften (beispielsweise bei Verwendung von PU) oder durch Anschmelzen gebildet sein.

Auch wenn die Gießform 1 hier rechteckig dargestellt ist, sind prinzipiell nahezu beliebige Formungen der Gießform 1 möglich. Insbesondere kann das Verfahren auch auf dreidimensional geformte Gießformen 1 angewendet werden. Ebenso können die Erhöhungen 3 der Gießform 1 bzw. die dadurch geformten Vertiefungen 6 der Formhaut 5 in nahezu beliebiger Weise dreidimensional ausgestaltet sein. Das heißt, es können nahezu beliebig geformte Dekors auf einfache Weise erzeugt werden. Insbesondere sind nicht nur nut- oder leistenförmige Dekors möglich.

Bei einem Verfahren zur Herstellung eines Fahrzeuginnenverkleidungsteils wird die Formhaut 5 nachfolgend mit einer Schaumschicht und vorzugsweise einem Träger verbunden. Optional ist es möglich, vor dem Hinterschäumen eine Verstärkungsstruktur auf die Rückseite der Vertiefungen 6 aufzubringen. Hierdurch kann, falls dies erwünscht ist, im Bereich der Vertiefungen 6 eine feste Haptik erzeugt werden. Dies kann insbesondere erwünscht sein, wenn das pigmenthaltige Fluid Pigmente, welche einen metallischen Glanz aufweisen, beinhaltet.

### Bezugszeichenliste

- 1: Gießform
- 2: Formoberfläche
- 3: Erhöhungen
- 4: Pigmentbedeckte Oberfläche
- 5: Formhaut
- 6: Vertiefungen
- 7: Pigmentierung

## Patentansprüche

1. Verfahren zum Erzeugen einer Formhaut (5) mit einem Dekor (6, 7) mit den in der angegebenen Reihenfolge durchgeführten Schritten:
- Aufbringen eines pigmenthaltigen Fluids auf mindestens eine Erhöhung (3) einer Formfläche (2) einer Gießform (1),
- Vorheizen der Form,
- Bedecken der Formfläche (2) der im Bereich der Erhöhung (3) mit Pigmenten versehenen Gießform (1) mit Kunststoffmaterial und
- Entnehmen einer so gebildeten Formhaut (5), wobei das Aufbringen des pigmenthaltigen Fluids durch Aufsprühen erfolgt und wobei ein die Erhöhungen (3) umgebender Bereich der Gießform (1) vor dem Aufsprühen des pigmenthaltigen Fluids mit einer Maske abgedeckt wird.

2. Verfahren nach einem der vorangehenden Ansprüche, **dadurch gekennzeichnet, dass** als pigmenthaltiges Fluid ein Plastisol und vorzugsweise ein PVC-Plastisol verwendet wird.

3. Verfahren nach Anspruch 1, **dadurch gekennzeichnet, dass** als pigmenthaltiges Fluid ein PU-Lack, welcher vorzugsweise aus zwei Komponenten besteht, verwendet wird.

4. Verfahren nach einem der vorangehenden Ansprüche, **dadurch gekennzeichnet, dass** als pigmenthaltiges Fluid ein Fluid mit mindestens einem Farbpigment und/oder mindestens einem Effektpigment verwendet wird.

5. Verfahren nach einem der vorangehenden Ansprüche, **dadurch gekennzeichnet, dass** das Aufbringen des Kunststoffmaterials durch Rotationssintern durchgeführt wird.

6. Verfahren nach einem der vorangehenden Ansprüche, **dadurch gekennzeichnet, dass** als Kunststoffmaterial Plastisol, vorzugsweise PVC-Plastisol, verwendet wird.

7. Verfahren nach einem der Ansprüche 1 bis 5, **dadurch gekennzeichnet, dass** als Kunststoffmaterial thermoplastisches Pulver, vorzugsweise thermoplastisches PVC-Pulver verwendet wird.

8. Verfahren nach einem der vorangehenden Ansprüche, **dadurch gekennzeichnet, dass** eine Gießform (1) mit Erhöhungen (3) die als in zumindest einer Richtung von nicht erhöhten Bereichen unterbrochene Erhöhungen (3) ausgebildet sind verwendet wird.

9. Verfahren zur Herstellung eines Fahrzeug Innenverkleidungsteils und insbesondere einer Instrumententafel mit den Schritten:
- Herstellen einer Formhaut (5) nach einem der Ansprüche 1 bis 10
- Hinterschäumen der Formhaut (5).

10. Verfahren nach Anspruch 9, **dadurch gekennzeichnet, dass** die Formhaut (5) vor dem Hinterschäumen zumindest teilweise an zu den Erhöhungen (3) der Gießform (1) korrespondierenden Vertiefungen (6) in der Formhaut mit einer Verstärkungsstruktur hinterlegt wird.

## Claims

1. A method for generating a molded skin (5) having a decor (6, 7), comprising the steps which are conducted in the indicated order:
- applying a pigment-containing fluid to at least one raised region (3) of a mold surface (2) of a casting mold (1),
- preheating the mold,
- covering the mold surface (2) of the casting mold (1), which in the area of the raised region (3) has been provided with pigments, with plastic material; and
- removing a molded skin (5) thus formed, wherein the pigment-containing fluid is applied by way of spraying and wherein an area of the casting mold (1) surrounding the raised regions (3) is covered with a mask before spraying on the pigment-containing fluid.

2. A method according to any one of the preceding claims, **characterized in that** the pigment-containing fluid used is a plastisol, and preferably a PVC plastisol.

3. A method according to claim 1, **characterized in that** the pigment-containing fluid used is a PU paint, which preferably is composed of two components.

4. A method according to any one of the preceding claims, **characterized in that** the pigment-containing fluid used is a fluid containing at least one color pigment and/or at least one effect pigment.

5. A method according to any one of the preceding claims, **characterized in that** the plastic material is applied by way of rotational sintering.

6. A method according to any one of the preceding claims, **characterized in that** the plastic material used is a plastisol, and preferably a PVC plastisol.

7. A method according to any one of claims 1 to 5, **characterized in that** the plastic material used is a thermoplastic powder, and preferably a thermoplastic PVC powder.

8. A method according to any one of the preceding claims, **characterized in that** a casting mold (1) having raised regions (3), which are formed as raised regions (3) which are interrupted by non-raised regions in at least one direction, is used.

9. A method for producing a vehicle interior lining part, and in particular, an instrument panel, comprising the following steps:
- producing a molded skin (5) according to any one of claims 1 to 10; and
- applying foam behind the molded skin (5).

10. The method according to claim 9, **characterized in that**, prior to back-foaming, a reinforcement structure is placed behind the molded skin (5) at least in some areas on the depressions (6) in the molded skin which correspond to the raised regions (3) of the casting mold (1).

## Revendications

1. Méthode pour générer une peau moulée (5) avec un décor (6, 7) grâce aux étapes réalisées dans l'ordre indiqué :
- Application d'un fluide contenant des pigments sur au moins une élévation (3) d'une surface de moulage (2) d'un moule (1),
- Préchauffage du moule,
- Couverture de la surface de moulage (2) du moule (1) pourvu de pigments dans la zone de l'élévation (3) avec de la matière plastique, et
- Retrait d'une peau moulée (5) ainsi formée, l'application du fluide contenant des pigments étant réalisée par pulvérisation et une zone du moule (1) entourant les élévations (3) étant recouverte d'un masque avant la pulvérisation du fluide contenant des pigments.

2. Méthode selon l'une quelconque des revendications précédentes, **caractérisée en ce qu'**un plastisol et de préférence un plastisol PVC est utilisé comme fluide contenant des pigments.

3. Méthode selon la revendication 1, **caractérisée en ce qu'**une laque PU constituée de préférence de deux composants est utilisée comme fluide contenant des pigments.

4. Méthode selon l'une quelconque des revendications précédentes, **caractérisée en ce qu'**un fluide comportant au moins un pigment de couleur et/ou au moins un pigment à effet est utilisé comme fluide contenant des pigments.

5. Méthode selon l'une quelconque des revendications précédentes, **caractérisée en ce que** l'application de la matière plastique est réalisée par frittage rotatif.

6. Méthode selon l'une quelconque des revendications précédentes, **caractérisée en ce que** du plastisol et de préférence du plastisol PVC est utilisé comme matière plastique.

7. Méthode selon l'une quelconque des revendications 1 à 5, **caractérisée en ce qu'**une poudre thermoplastique, de préférence une poudre de PVC thermoplastique est utilisée comme matière plastique.

8. Méthode selon l'une quelconque des revendications précédentes, **caractérisée en ce qu'**un moule (1) est utilisé comportant des élévations (3) formées en des élévations (3) interrompues dans au moins une direction par des zones non élevées.

9. Méthode de fabrication d'un élément de garniture intérieure de véhicule et en particulier d'un tableau de bord comprenant les étapes ci-après :
- Realisation d'une peau moulée (5) selon l'une quelconque des revendications 1 à 10
- Surmoussage de la peau moulée sur sa face arrière (5).

10. Méthode selon la revendication 9, **caractérisée en ce que** la peau moulée (5) est soutenue avant le surmoussage par une structure de renforcement au moins partielle au niveau des cavités (6) dans la peau moulée correspondant aux élévations (3) du moule (1).
